(19) Europäisches Patentamt
European Patent Office
Office européen des brevets

(11) Publication number: **0 520 627 A2**

# (12) EUROPEAN PATENT APPLICATION

(21) Application number: **92304967.0**

(22) Date of filing: **29.05.92**

(51) Int. Cl.5: **C08G 18/80**, C07C 275/06, C09D 5/44

(30) Priority: **27.06.91 US 722527**

(43) Date of publication of application: **30.12.92 Bulletin 92/53**

(84) Designated Contracting States: **DE FR GB IT SE**

(71) Applicant: **MINNESOTA MINING AND MANUFACTURING COMPANY**
**3M Center, P.O. Box 33427**
**St. Paul, Minnesota 55133-3427(US)**

(72) Inventor: **Pocius, Alphonsus V., c/o**
**Minnesota Mining and Manufact. Comp., 2501 Hudson Road, P.O. Box 33427**
**St. Paul, Minnesota 55133-3427(US)**
Inventor: **Wilson, Thomas H., Jr., c/o**
**Minnesota Mining and Manufact. Comp., 2501 Hudson Road, P.O. Box 33427**
**St. Paul, Minnesota 55133-3427(US)**

(74) Representative: **Baillie, Iain Cameron et al**
**c/o Ladas & Parry, Altheimer Eck 2**
**W-8000 München 2(DE)**

## (54) Polyisocyanates partially blocked by amines and selfcuring resinous adducts derived therefrom.

(57) A resinous adduct comprises the reaction product of polyisocyanate partially blocked by at least one amine and a resinous material. The partially blocked polyisocyanate has the formula:

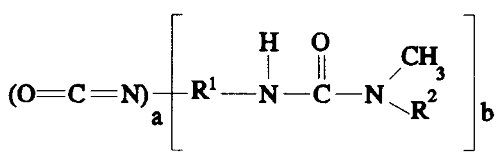

$R^1$ is the organic residue of an aliphatic, aromatic, or aliphatic-aromatic polyisocyanate and $R^2$ is methyl or ethyl. Each of a and b are integers greater than 1 and their sum is 2, 3 or 4.

The resinous material has an isocyanate reactive functionality. The resinous material may have the following structure:

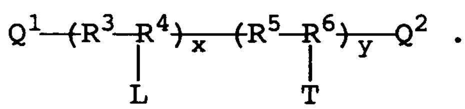

It may also have the following structure:

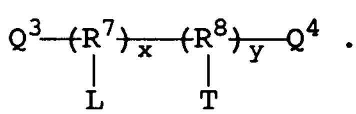

EP 0 520 627 A2

$R^3$, $R^4$, $R^5$ and $R^6$ are monomer-forming chemical moieties or polymerization products thereof. $R^7$ and $R^8$ are the backbone portions of vinyl or an acrylic group-containing monomers. $Q^1$, $Q^2$, $Q^3$, $Q^4$ and T are chemical moieties which may be reactive with isocyanate functionality. L is a chemical moiety which is reactive with isocyanate functionality. The value of x is greater than or equal to 1 and the value of y is greater than or equal to 0.

## BACKGROUND OF THE INVENTION

### Field of the Invention

This invention relates to partially blocked polyisocyanates and, more particularly, to polyisocyanates having less than all isocyanate functionality blocked by an amine. The resulting partially blocked polyisocyanates are useful in generating resins which self-cure at a low temperature.

### Description of the Related Art

In general, a blocked isocyanate may be formed in a temperature dependent reversible reaction in which an isocyanate, R-NCO, is reacted with a blocking agent, BL-H, having an active hydrogen to mask the isocyanate functionality. This reaction may be illustrated as follows:

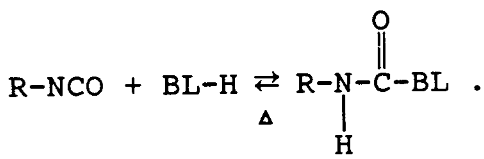

The resulting blocked isocyanate is unreactive at lower temperatures, for example, room temperature. However, upon heating and possibly with catalyzation, the blocked isocyanate "unblocks" thereby releasing BL-H and regenerating the isocyanate.

The isocyanate is then free to react with, for example, R'XH, X being O, N-H or any moiety having active hydrogen. The reaction between the regenerated isocyanate and R'XH may be illustrated generally as:

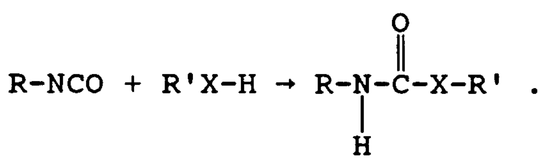

The reaction illustrated above in which an isocyanate is reacted with a blocking agent generates a fully blocked isocyanate, that is, a compound in which all isocyanate functionality is masked by the blocking group. Such a compound may be distinguished from a partially blocked isocyanate which, as used herein, refers to a polyfunctional isocyanate in which less than all of the isocyanate functionality is masked by a blocking agent. Such a reaction may be represented as follows:

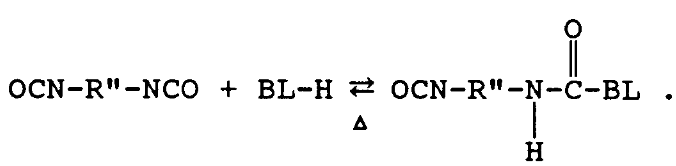

OCN-R''-NCO represents a polyisocyanate (e.g., a diisocyanate) and BL-H is the same as above. In the resulting compound, one isocyanate functionality (i.e., one equivalent of isocyanate functionality) has been masked by the blocking agent while the other remains free or unblocked.

U.S. Patent No. 4,444,954, Water Reducible Quarternary Ammonium Salt Containing Polymers, issued April 24, 1984, to S. Mels et al. discloses that a fully blocked isocyanate may be formed from any isocyanate (or polyisocyanate) so long as the blocked isocyanate is stable at room temperature and reactive at temperatures in the range of about 150°-600°F (66°-316°C).

The fully blocked isocyanate may be prepared by reacting a partially blocked isocyanate with an active hydrogen containing molecule which combines with the remaining isocyanate groups. The partially blocked polyisocyanate precursor is prepared by adding a less than stoichiometric amount of a blocking agent to a

polyfunctional isocyanate. Suitable blocking agents include phenols, lactams, active methylenes, alcohols, mercaptans, acid amines, imidazoles, ureas, carbamates, imines, oximes, sulfurous acid salts, and hydroxamic acid esters or acyl hydroxamates. Lactams, active methylenes, oximes, hydroxamic acid esters, and acyl hydroxamates are preferred. Hydroxylated amines in which the hydroxyl group blocks the isocyanate functionality are identified as possible blocking agents. Neither dimethylamine nor ethylmethylamine is disclosed although Mels et al. infer that the partial reaction of an isocyanate with an amine can take place by appropriate control of stoichiometry. British Patent No. 2,066,269, Cathodically Depositable Acrylic Coating Composition, issued July 8, 1981, to Miyaka et al. contains a similar intimation.

However, it is well known by those having ordinary skill in the art that the generation of a polyisocyanate partially blocked by amine functionality is exceedingly difficult if not virtually impossible to obtain by conventional means such as control of stoichiometry or rate of addition because of the extremely rapid reaction between the amine and the polyisocyanate. Thus, the failure of Mels et al. and Miyaka et al. to disclose the generation and/or use of a polyisocyanate partially blocked by amine is not surprising.

Isocyanates completely blocked by amines are useful curing agents for epoxy resins as disclosed in U.S. Patent Nos. 3,386,955, 3,386,956, and 3,562,215. German patent publication 3,739,480 A1 discloses a method for providing a urea-blocked polyisocyanate useful as a curing agent by reacting a partially blocked polyisocyanate with a polyamine. Blocking agents useful in preparing the partially blocked isocyanate disclosed in the aforementioned German patent publication include alcohols, oximes, mercaptans and lactams.

U.S. Patent Nos. 3,935,087 and 3,947,338 disclose a diisocyanate partially blocked with an alcohol. The partially blocked diisocyanate can be reacted with a resinous material having multiple hydroxyl groups to generate a coatable resin in which the blocked isocyanate is pendant to the main resin backbone. The presence of the partially blocked isocyanate renders the resin self-crosslinking. It is stated that the resin may be coated on any electrically conductive substrate such as steel, aluminum or copper and that curing temperatures from about 250 °F (121 °C) may be employed. However, the use of substrates other than untreated steel, galvanized steel, and zinc phosphate treated steel and curing temperatures less than 325 °F (163 °C) are not exemplified.

U.S. Patent No. 2,683,727 to Mastin et al. discloses compounds comprising the reaction product of a polyisocyanate and a secondary aromatic amine. The compounds are useful as delayed action curing or crosslinking agents.

U.S. Patent No. 4,544,687 to Schupp et al. discloses the preparation of a compound that comprises the reaction product of a polyisocyanate and an olefinically unsaturated amine which carries a secondary amino group and a methacrylamide or methacrylate group.

U.S. Patent No. 4,615,779 to McCollum et al. discloses fully and partially blocked polyisocyanates in which the blocking groups are low molecular weight alcohols (i.e., an average molecular weight of 76 or less).

A compound comprising a polyisocyanate partially blocked by dimethylamine or ethylmethylamine is presently unknown. In addition, a resin which when modified with such a partially blocked polyisocyanate becomes self-crosslinking (i.e., self-curing) is presently unknown. Also unknown is a resinous material appended with a polyisocyanate partially blocked by an amine which self-cures without the need for polyisocyanate or amine reactive functionality beyond that necessary to append the partially blocked polyisocyanate to the resinous backbone. Also unknown is a modified resin of this type which may be employed as a self-crosslinking cathodic electrophoretically depositable coating composition.

A self-curing resin which may be used as a coating would be advantageous in that an external curing agent would not be required. It would also be advantageous if such a self-curing resin could cure at temperatures of about 250 °F (121 °C). Presently known compositions do not self-cure at temperatures of about 250 °F (121 °C) to provide useful electrophoretically depositable coatings.

## SUMMARY OF THE INVENTION

This invention relates to a polyisocyanate partially blocked by at least one amine. The partially blocked polyisocyanate may be represented by the following formula:

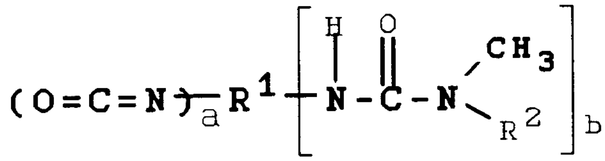

$R^1$ is the organic residue of an aliphatic, aromatic, or aliphatic-aromatic polyisocyanate and $R^2$ is methyl or ethyl. Each of a and b are integers greater than or equal to 1. The sum of a and b is 2, 3 or 4 and is the number of equivalents of isocyanate functionality for the polyisocyanate prior to having been partially blocked.

A resinous adduct which comprises the reaction product of the partially blocked polyisocyanate and a resinous material having a chemical moiety reactive with isocyanate functionality may be formed. The resinous material may have the following structure:

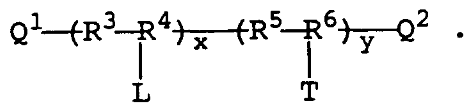

The resinous material may also have the following structure:

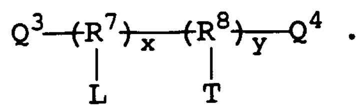

$R^3$, $R^4$, $R^5$ and $R^6$ are monomer-forming chemical moieties or polymerization products thereof. They may be the same or may be different. $R^7$ and $R^8$ comprise the backbone portions of vinyl or acrylic group-containing monomers. They may be the same or may be different. $Q^1$ and $Q^2$ are chemical moieties which may be reactive with isocyanate functionality and they may be the same or may be different. $Q^3$ and $Q^4$ are chemical moieties which may be reactive with isocyanate functionality and may be the same or may be different. L is a chemical moiety which is reactive with isocyanate functionality. T is a chemical moiety which may be reactive with isocyanate functionality. The value of x is greater than or equal to 1 and the value of y is greater than or equal to 0.

The resinous adduct is self-curing (i.e., self-crosslinking) and cures upon exposure to a temperature of less than about 400°F (204°C) (more preferably less than about 300°F (149°C) and most preferably in the range of about 225°-250°F (107°-121°C) to about 300°F (149°C)). The resinous adduct is useful as a cathodic electrophoretically depositable composition and in the formulation of solvent based coatings, adhesives and composite matrix resins.

The invention also relates to a method for making the polyisocyanate partially blocked by an amine. The method comprises the step of reacting a polyisocyanate with dimethylamine and/or ethylmethylamine. The reaction is carried out in a solvent system in which the polyisocyanate is very soluble but in which the partially blocked polyisocyanate is very insoluble. The invention also relates to a method for forming the resinous adduct by reacting the partially blocked polyisocyanate with a resinous material having a chemical moiety which is reactive with isocyanate functionality.

In order to form the electrophoretically depositable composition, the resinous adduct is mixed with an organic solvent which is no more than sparingly soluble in water and which volatilizes at a temperature below about 400°F (204°C), a coalescing solvent which volatilizes at a temperature below about 400°F (204°C), and water. The composition may be applied to thermally sensitive substrates, for example, those formed at least in part from aluminum or alloys thereof. The substrate is placed in a vessel and in fluid contact with a bath of the composition, the vessel having an anode. The substrate and the anode are connected to a power supply and a current is passed between the substrate and the anode and through the bath so as to cause a layer of the composition to be electrophoretically deposited on the substrate. The substrate is then heated thereby causing the composition to crosslink (cure).

## DETAILED DESCRIPTION OF THE PREFERRED EMBODIMENTS

This invention relates to polyisocyanates partially blocked by aliphatic, dialkyl amines. That is, at least one isocyanate group, equivalent or functionality of a polyisocyanate remains unblocked or unreacted while the remaining isocyanate group or groups is/are blocked or masked by the active hydrogen component of a secondary, dialkyl substituted amine.

A compound according to the invention may be represented by the following general formula:

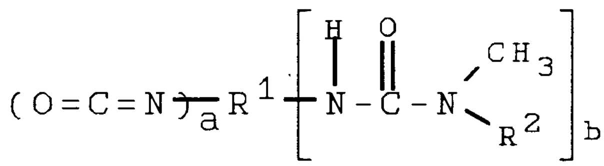

$R^1$ is the organic residue of an aliphatic, aromatic, or aliphatic-aromatic polyisocyanate. By "organic residue" it is meant that $R^1$ represents the organic backbone to which the isocyanate groups are appended. $R^2$ is an aliphatic alkyl group, a is an integer ≧1, b is an integer ≧1, and a+b = 2, 3 or 4. The partially blocked polyisocyanate has at least one equivalent of isocyanate functionality (the unblocked isocyanate group(s)) and at least one equivalent of urea functionality (the isocyanate group(s) blocked by amine). The ratio of the number of equivalents of isocyanate functionality to the number of equivalents of urea functionality ranges from 1:0.33 to 1:3, more preferably from 1:1 to 1:3, and most preferably is 1:1.

As explained more fully hereinbelow, partially blocked polyisocyanates according to the invention are useful intermediates in the preparation of low temperature, self-curing resinous adducts. Such resinous adducts can, for example, provide coatings that may be electrophoretically deposited on a substrate to provide a coating therefore. By "self-curing" it is meant that an externally added crosslinking agent is not required to promote the crosslinking of the coating under the conditions disclosed in the application in order to provide a useful material. A "self-curing" composition is sometimes referred to as "self-crosslinking." By "crosslinking" (sometimes referred to as "curing") it is meant that the resinous adduct or coating is insoluble in a solvent in which the same materials prior to crosslinking were soluble. Resinous adducts formed according to the invention are also useful as adhesives, coatings, sealants, composites and the like based on thermosetting resins.

1. Formation of a partially blocked nolyisocyanate.

The partially blocked polyisocyanate may be formed by reacting a polyisocyanate with an aliphatic dialkylamine blocking agent in an appropriate solvent system. A wide variety of organic polyisocyanates may be used in accordance with the invention. Illustrative examples include but are not limited to the aliphatic compounds such as trimethylene, tetramethylene, pentamethylene, hexamethylene, 1,2-propylene, 1,2-butylene, 2,3-butylene and 1,3-butylene diisocyanate; the aromatic compounds such as m-phenylene, p-phenylene, 4,4'-diphenyl and 1,4-napthalene diisocyanate; the aliphatic-aromatic compounds such as 4,4'-diphenylene methane, 2,4- or 2,6-tolylene diisocyanate, or mixtures thereof, 4,4'-toluidine and 1,4-xylene diisocyanate; the triisocyanates such as triphenyl methane-4,4',4''-triisocyanate, 1,3,5-triisocyanate benzene and 2,4,6-triisocyanate toluene; the tetraisocyanates such as 4,4'-diphenyl-dimethyl methane-2,2',5,5'-tetraisocyanate; and the polymerized polyisocyanates such as tolylene diisocyanate dimers and trimers, polymethylene polyphenylene polyisocyanates having isocyanate functionality of 2 to 3, and the like. Mixtures of the foregoing may be used. A list of useful commercially available polyisocyanates may be found in the Encyclopedia of Chemical Technology, Kirk-Othmer, 2nd ed., vol. 12, pp. 46-47, Interscience Pub., N.Y. (1967). Diisocyanates are preferred, in which event a and b in the above formula each equal 1. The preferred polyisocyanates are 2,4- and 2,6-tolylene diisocyanates and mixtures thereof.

The aliphatic, secondary amine (dialkylamine) is preferably dimethylamine, ethylmethylamine or mixtures thereof in which case $R^2$ is either ethyl or methyl.

The solvent system for the isocyanate/dialkylamine reaction may comprise any low or moderate polarity solvent which dissolves the polyisocyanate but which does not dissolve the partially blocked polyisocyanate. As explained more fully hereinbelow, it is important that the organic polyisocyanate be very soluble in the solvent but become very insoluble when the requisite number of equivalents of isocyanate (i.e., isocyanate groups) has/have been blocked by the dialkylamine during the formation of the partially blocked polyisocyanate. Thus, the reaction product of the secondary aliphatic amine/polyisocyanate reaction is a compound having at least one equivalent of isocyanate functionality and at least one equivalent of urea

functionality.

A solvent system is considered useful in accordance with the invention if (1) the addition of 1,000 grams of the polyisocyanate to 1 liter of the solvent system at a temperature of 5 ° C forms a visibly homogeneous solution (i.e., the polyisocyanate is "very soluble" in the solvent), and (2) the addition of at least 0.1 milliliter of the dialkylamine to the polyisocyanate/solvent system forms an immediate and visible precipitate of the partially blocked polyisocyanate (i.e., the partially blocked polyisocyanate is "very insoluble" in the solvent).

Examples of suitable solvent systems include, but are not limited to, the aliphatic hydrocarbon solvents such as pentane, hexane, heptane, octane, nonane, decane, undecane, dodecane, etc. Also included are branched aliphatic hydrocarbons, for example, 3-methylpentane, 2-methylpentane, 2,3-dimethylbutane, 2,2-dimethylbutane, 2,2,3-trimethylbutane, 2,3-dimethylpentane, 4-ethyl-3-methylheptane, etc. Aromatic hydrocarbons such as benzene, toluene, xylene and the like are also useful. Mixtures of the aforementioned solvents may also be used to provide a suitable solvent system.

A single solvent system may not be appropriate for generating a series of partially blocked polyisocyanates which differ in the number of blocked and unblocked equivalents of isocyanate. It is expected that the particular formulation of the solvent system will have to be varied somewhat in order to produce a partially blocked polyisocyanate having the desired number of blocked and unblocked equivalents of isocyanate.

The partially blocked polyisocyanate may be readily generated. A suitable organic polyisocyanate is dissolved in an appropriate low polarity solvent and the solution may be cooled slightly from room temperature. The optimal temperature for the solution will be determined by the particular organic polyisocyanate. For the preferred polyisocyanates, 2,4- and 2,6-tolylene diisocyanate and mixtures thereof, the desired temperature is approximately 40 ° F (5 ° C). An appropriate dialkylamine (dimethylamine or ethylmethylamine) is also dissolved in the solvent. The dialkylamine should be provided in an amount sufficient to block the requisite number of equivalents of isocyanate on the polyisocyanate.

The dialkylamine solution is added slowly to the polyisocyanate/solvent system solution such that an excess of polyisocyanate (relative to the dialkylamine) is always present. If the polyisocyanate, dialkylamine and solvent system have been appropriately selected, a precipitate of the partially blocked polyisocyanate will form immediately. The rapid precipitation of the partially blocked polyisocyanate results from the insolubility of the partially blocked polyisocyanate in the solvent, thereby preventing further reaction between the polyisocyanate and the dialkylamine which could lead to the formation of a fully blocked polyisocyanate. Once the dialkylamine has been completely added, the reaction mixture is suction filtered, washed with solvent, and dried in a vacuum oven. The precipitate should be stored in an inert nitrogen gas atmosphere to prevent hydrolysis of the isocyanate.

2. <u>Formation of a partially blocked polyisocyanate-resin adduct</u>.

As explained more fully below, the partially blocked polyisocyanate provides a useful intermediate for reaction with a resinous material (i.e., a natural or synthetic polymeric material) having a chemical moiety which is reactive with isocyanate thereby resulting in the formation of an adduct of the two materials. The resinous adduct (referred to at times as "the adduct") has the desirable and surprising characteristic of being self-curing at relatively low temperatures. By appropriate selection of the moieties appended to the polymeric backbone of the resin, the resinous adduct can function as a coating that can be applied to a substrate by electrophoretic deposition.

A catalyst may be used to promote the formation of the adduct. Tin-containing organometallic catalysts such as dibutyl tin dilaurate and dibutyl tin acetate are particularly useful.

The polymeric backbone of the resinous material (or resin) may be derived from either a condensation polymerization reaction or an addition polymerization reaction. If the polymer backbone comprises a condensation polymer (i.e., the backbone is derived from a condensation polymerization reaction), the resinous material will have a general structure which may be described as:

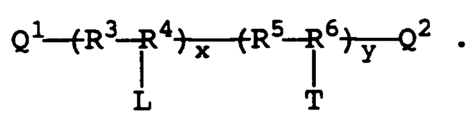

$R^3$, $R^4$, $R^5$ and $R^6$ comprise monomer-forming chemical moieties or polymerization products thereof. By

"monomer-forming chemical moieties" it is meant that $R^3$, $R^4$, $R^5$ and $R^6$ may comprise saturated, unsaturated or aromatic structures comprised of carbon and hydrogen exclusively or further including various heteroatoms such as, for example, oxygen, nitrogen, phosphorus or sulfur. Alternatively, $R^3$, $R^4$, $R^5$ and $R^6$ may comprise products which result from the polymerization of such monomer-forming chemical moieties. $R^3$, $R^4$, $R^5$ and $R^6$ may be the same or may be different. Correspondingly, the backbone units ($R^3$-$R^4$) and ($R^5$-$R^6$) may be the same or may be different. The significance of L and T are explained more fully below.

$Q^1$ and $Q^2$ are functionally optional chemical moieties appended to the polymeric backbone of the resin and may be the same or may be different. "Chemical moiety" is used broadly here and encompasses not only functional groups physically appended to the polymeric backbone but also extensions of the polymeric backbone and valence completing protons. In the case of valence completing protons, $Q^1$ and $Q^2$ would be incorporated into, respectively, $R^3$ and $R^6$ so as to form complete chemical units.

By "functionally optional" it is meant that $Q^1$ and $Q^2$ may but need not be reactive toward isocyanate functionality. In some instances, it may be desirable for $Q^1$ and $Q^2$ to be unreactive toward isocyanate. Examples of such instances include self-curing epoxy or phenolic resins. In other situations, for example, where an increased amount of crosslinking is desirable, it may be appropriate for $Q^1$ and/or $Q^2$ to be isocyanate reactive. In these instances, reaction occurs at $Q^1$ and/or $Q^2$ when the partially blocked polyisocyanate is combined with the resin. In yet a third setting, it may be desirable for $Q^1$ and $Q^2$ to be unreactive toward isocyanate at the time that the resin is adducted with the partially blocked polyisocyanate but then be converted so as to be isocyanate reactive. For example, in the generation of an electrodepositable primer, it may be desirable for $Q^1$ and $Q^2$ to be hydroxyl groups so as to improve the aqueous solubility of the primer yet at the same time it may be undesirable for $Q^1$ and $Q^2$ to comprise isocyanate reactive hydroxyl groups during the formation of the adduct.

Examples of suitable resins which incorporate a condensation polymer backbone include, for example, epoxy resins containing hydroxyl groups, polymers resulting from the polymerization of aziridine, phenolic resins, and polyurethane resins with accessible carbamates or hydroxyl groups.

If the polymer backbone comprises an addition polymer (i.e., the backbone is derived from an addition polymerization reaction), the resinous material will have a general structure which may be described as:

$$Q^3 - \underset{\substack{| \\ L}}{(R^7)_x} - \underset{\substack{| \\ T}}{(R^8)_y} - Q^4 \quad .$$

$R^7$ and $R^8$ comprise the backbone portions of vinyl or acrylic group-containing monomers and may be the same or may be different. The "backbone portion" of the vinyl or acrylic group-containing monomer may be saturated, unsaturated or aromatic and may be based exclusively on carbon and hydrogen or may further include various heteroatoms such as, for example, nitrogen, oxygen, phosphorus or sulfur.

$Q^3$ and $Q^4$ are chemical moieties appended to the polymeric backbone of the resin may be the same or may be different. By "chemical moiety" it is meant that $Q^3$ and $Q^4$ may comprise valence completing protons (in which event they form a part of, respectively, $R^7$ and $R^8$). Alternatively, as chemical moieties, $Q^3$ and/or $Q^4$ may comprise organic residue extensions of the polymeric backbone. The phrase "organic residue extensions of the polymeric backbone" is intended to recognize, for example, that the resin may comprise the reaction product of any combination of addition polymerizable monomers having the requisite number of L groups pendant to the polymeric backbone or incorporated within other moieties that are pendant to the polymeric backbone. Thus, the resin need not be in the form of a copolymer (comprised only of monomers $R^7$ and $R^8$) but may be a terpolymer, a quadrapolymer, and so on.

$Q^3$ and $Q^4$ may but need not be reactive toward isocyanate functionality. In some settings it may be desirable for $Q^3$ and $Q^4$ to be unreactive toward isocyanate. In other situations it may be desirable for $Q^3$ and $Q^4$ to be isocyanate reactive. In other cases it may be desirable for $Q^3$ and $Q^4$ to be unreactive toward isocyanate at the time that the resin is adducted with the partially blocked polyisocyanate but then be converted so as to be isocyanate reactive.

Examples of suitable resins which incorporate an addition polymer backbone include, for example, copolymers of vinylalcohol with any free radical, cationically or anionically copolymerizable comonomer and acrylic copolymers having at least 0.1% hydroxyethylacrylate or hydroxyethylmethacrylate.

In each of the above general structures, $x+y$ represents the degree of polymerization of the resin, x is an integer having a value greater than or equal to 1, and the value of y is greater than or equal to zero. In the case of a partially blocked diisocyanate, the ratio of $x/(x+y)$ can range from 0.001 to 1. In this situation,

the number of equivalents (n) of the partially blocked polyisocyanate reacted with the resin to form the adduct should be selected such that the ratio n/x is in the range of about 0.001 to 1 and the ratio n/(x + y) is in the range of about 0.001 to 1. Preferably, the range of n/x is from 0.1 to 0.75 and most preferably is from 0.15 to 0.5. In the most preferred range, the resin is self-curing even at relatively low temperatures and even without T, $Q^1$ or $Q^2$ groups which are reactive with the thermal degradation products of the partially blocked polyisocyanate, the significance of which is explained more fully below.

In each of the above general structures, L represents a chemical moiety which is reactive with isocyanate functionality, which chemical moiety may be internal, terminal or pendant relative to the polymer backbone of the resin. In general, any resinous material may be used so long as it contains a chemical moiety reactive with isocyanate. The presence of an isocyanate-reactive moiety (i.e., an "L" moiety) is essential to the invention.

If L is considered the isocyanate reactive moiety, L may be selected from the group consisting of amidyl, aminyl, imidyl, sulfonamidyl, amidinyl, nitraminyl, hydrazinyl, hydroxaminyl, hydrazoyl, uryl, carbamoyl, hydroxyl, phenol, oxime, imidazolyl, and mercaptyl functionalities. The functionalities may be appended directly to the polymer backbone or may be joined indirectly thereto by way of any appropriate organic aliphatic, aromatic, or aliphatic aromatic group.

In each of the above general structures, T represents a functionally optional chemical moiety appended to the polymer backbone. By "chemical moiety" it is meant that T may be a valence completing proton (in which event it is incorporated into $R^6$ or $R^8$) or a functional group that is appended to the polymeric backbone of the resin. By "functionally optional" it is meant that T may or may not be reactive with isocyanate functionality. However, although T may be reactive with isocyanate functionality, T does not react with the isocyanate functionality of the partially blocked polyisocyanate under the conditions disclosed herein. Thus, a moiety which is reactive toward isocyanate functionality is only considered a "T" moiety if it does not react with the isocyanate functionality of the partially blocked polyisocyanate during the formation of the resinous adduct. (If the moiety reacts with the isocyanate functionality of the partially blocked polyisocyanate, it is considered an "L" moiety.) A T moiety may be the same as $Q^1$ and/or $Q^2$. In the case where the polymer backbone comprises a condensation polymer, T may be a water compatibilizing moiety (i.e., a moiety which facilitates the aqueous solubility of the resinous adduct, for example, a hydroxyl group) much in the same way as $Q^1$ and $Q^2$ may be.

The T, $Q^1$, $Q^2$, $Q^3$ and $Q^4$ chemical moieties may be reactive with the thermal degradation products of the partially blocked polyisocyanate, presumably dialkylamine and polyisocyanate. The T, $Q^1$, $Q^2$, $Q^3$ and $Q^4$ groups may be selected to be reactive with the thermal degradation products if, for example, specific performance characteristics (e.g., the formation of a structural adhesive material) are desired. Epoxy groups are particularly useful in this instance because they are known to polymerize or cure in the presence of secondary amines, a thermal degradation product of the partially blocked polyisocyanate.

If T, $Q^1$, $Q^2$, $Q^3$ and $Q^4$ are cationic, anionic or nonionic, then the resulting adduct is a water-dispersed, self-curing coating resin. Methods of forming cationic structures are disclosed in the following U.S. Patent Nos: 3,894,922; 3,947,339; 3,959,106; 4,009,133; 4,038,232; 4,040,924; 4,097,352; 4,101,486 and 4,104,147. T, $Q^1$, $Q^2$, $Q^3$ and $Q^4$ may be any combination of nonionic, cationic or anionic groups, including zwitterions.

Surprisingly, it is not essential that the T, $Q^1$, $Q^2$, $Q^3$ and $Q^4$ moieties be reactive with the thermal degradation products of the partially blocked polyisocyanate. As described hereinabove, in diisocyanates partially blocked by an alcohol functionality, the corresponding T, $Q^1$ and $Q^2$ moieties must be reactive toward the thermal degradation products of the blocked compound in order to provide a self-curing resin. However, in the instant invention, the presence of the partially blocked polyisocyanate in the adduct is sufficient to cure the resin.

Resins containing 1,2-epoxy groups (i.e., a resin based on a condensation polymer) are particularly useful in accordance with the teachings of the invention. Preferably, the epoxies are polyepoxides (more than one epoxy group per molecule) having more than one 1,2-epoxy group per molecule. The polyepoxide may be any of the well known epoxides including those which are disclosed in the following U.S. Patent Nos: 2,467,171; 2,615,007; 2,716,123; 3,030,336; 3,053,855 and 3,075,999. It is important that the epoxy resin contain a sufficient number of L groups to fall within the above-specified ranges.

Suitable polyepoxides include the polyglycidyl ethers of polyphenols (Bisphenol A), polyhydric alcohols, and polycarboxylic acids; polyepoxides derived from the epoxidation of an olefinically unsaturated alicyclic compound; polyepoxides containing oxyalkylene groups in the epoxy molecule; and nitrogenous diepoxides.

Another useful class of resins which may be employed are acrylic polymers containing epoxy groups or hydroxyl groups, which are resins based on addition polymers. Resins of these types are disclosed in U.S. Patent No. 3,894,922.

Any polymerizable monomeric compound containing at least one $CH_2 = C<$ group, preferably in a

terminal position, may be polymerized with unsaturated glycidyl compounds or unsaturated hydroxyl group containing compounds to generate an addition polymer. Examples of such monomers may be found in U.S. Patent No. 3,894,922 and include generally monoolefinic and diolefinic hydrocarbons, halogenated monoolefinic and diolefinic hydrocarbons, esters of organic and inorganic acids, and organic nitriles.

Another class of polymers useful in preparing resins that can be adducted with the partially blocked polyisocyanate are the hydroxyl group containing polyurethanes, which are examples of resins based on condensation polymers. Hydroxyl group containing polyurethanes are analogous to isocyanate polyurethanes (the preparation of which are well known as shown in U.S. Patent No. 3,894,922) except for the replacement of the terminal isocyanate functionality by a terminal hydroxy functionality. Of course, in preparing the hydroxyl group containing polyurethanes, an excess of the organic polyol is used rather than an excess of the organic polyisocyanate. The ratio of organic polyisocyanate compound to polymeric glycol is usually and preferably between about 1:1.3 and 1:2.0.

If it is desirable to have a greater number of hydroxyl groups in the polymer, an isocyanate terminated prepolymer can be generated by having a stoichiometric excess of the isocyanate functionality. Then a polyhydric alcohol can be added to the polymer to provide extra hydroxyl functionality. An example of a polyhydric alcohol is pentaerythritol. Amino alcohols such as diethanolamine, triethanolamine, etc. may also be used. The preparation of these compounds is analogous to that described in U.S. Patent No. 3,894,922 for the preparation of isocyanate group containing polyurethanes except that the reaction is carried to the point where most of the isocyanate groups have been reacted.

Although not wishing to be bound to any particular theory for the crosslinking of the partially blocked polyisocyanate adducted resins, several mechanisms may be postulated. The self-cure mechanism for a resin which contains T, $Q^1$ and/or $Q^2$ groups which are reactive with isocyanate is thought to be the reaction of the thermally liberated isocyanate with T, $Q^1$ and/or $Q^2$. Such resins are those which contain a plethora of hydroxyl groups which have not been reacted with the partially blocked polyisocyanate or which have been generated after the partially blocked polyisocyanate has reacted with the resin. Such a resin is the base resin for a cathodically electrodeposited coating.

The self-cure mechanism for a resin in which T, $Q^1$ and/or $Q^2$ are not reactive with isocyanate but are reactive with the thermal degradation products of the partially blocked polyisocyanate (i.e. the dialkylamine) is one of polymerization catalyzed by the dialkylamine. Such a resin would be an addition polymer in which one of the monomers could be glycidylmethacrylate. It is possible that a resin could have T, $Q^1$ and/or $Q^2$ groups which are separately reactive with isocyanate as well as dialkylamine. Such resins would include epoxy resins which contain hydroxyl groups as well as epoxy groups.

The self-cure mechanism for resins which have T, $Q^1$ and/or $Q^2$ groups which are reactive with neither isocyanate nor the thermal degradation products of the partially blocked polyisocyanates is not well understood. It is possible that dissociation of the adduct into dialkylamine and polyisocyanate is followed by the reaction of the liberated polyisocyanate with a non-dissociated urea to generate a biuret or with another equivalent of a liberated polyisocyanate to generate a uretidine dione. A crosslink forms because the partially blocked polyisocyanate is bound to the resin by the linkage between the partially blocked polyisocyanate and the "L" group of the resin. This mechanism predicts that if a diurea (i.e, a diisocyanate fully blocked by amine and which does not form an adduct with the resin) were added instead of the partially blocked polyisocyanate (in this case a partially blocked diisocyanate), crosslinking would not result at the preferred temperatures. This was attempted and no crosslinking was found to have occurred (as exemplified below).

3. Formation of a partially blocked polyisocyanate-resin adduct useful as a cathodic electrophoretically depositable coating.

As noted hereinabove, the partially blocked polyisocyanate-resin adduct can provide a cathodic electrophoretically depositable coating composition. In such an arrangement, T, $Q^1$, $Q^2$, $Q^3$ and/or $Q^4$ are selected so as to be unreactive toward isocyanate at the time that the adduct is formed but then are subsequently converted to cationic groups that allow the polymer to be water soluble or at least water dispersible. By "water soluble" it is meant that the adduct forms a homogeneous solution with water when added to water in any proportion. By "water dispersible" it is meant that the adduct, when added to water (possibly with agitation) forms a stable suspension or that the adduct can be easily resuspended in water with agitation. Cation groups based on nitrogen, sulfur or phosphorous are particularly useful.

Several methods can be used to introduce the cationic functionality in to the resin. For example, an acrylic monomer can be selected as the base monomer while using dimethylaminoethylmethacrylate as a comonomer. The polymer then contains pendant dimethylamino groups and can be made into an amine

acid salt by salting with an appropriate acid as described below. Alternatively (or jointly) an acrylic polymer can be made having glycidylmethacrylate as a comonomer. The glycidyl function can be transformed into a cationic function by conventional means. For example, the reaction of a glycidyl group with a secondary amine forms an aminoalcohol which can then be salted with an appropriate acid. It will be understood that in these examples using addition polymers, the cation functionality serves as the T group.

An acid or acidic solubilizing agent is used, preferably an organic acid. Lactic acid is preferred. Suitable acids are disclosed in the following U.S. Patent Nos: 3,925,181; 3,935,087; 4,064,090 and 4,339,369 and include carboxylic acids such as formic acid, carbonic acid, acetic acid, oxalic acid, lactic acid, succinic acid, maleic acid, malic acid, citric acid, gallic acid, and mixtures thereof. Phosphoric acid and aryl sulfonic acids may also be used.

A variety of water based resins can also be used. Suitable examples include those resins which are disclosed in U.S. Patent No. 4,904,360.

For electrodeposition applications, a coating resin adducted with the partially blocked polyisocyanate is preferably combined with an organic resin solvent, a coalescing solvent and water. Suitable organic resin solvents are insoluble or, at most, sparingly soluble in water, but readily solubilize the coating compositions and volatilize at a temperature below that at which the coating resin will be cured. By "insoluble" it is meant that the resin solvent forms a visibly determinable meniscus with water and that if the solvent is analyzed for the presence of water by a Karl-Fischer titration, that water is not detected. By "sparingly soluble" it is meant that mixing together 1 milliliter volumes of the solvent and water in a glass test tube at 20 °C and shaking for one minute results in the formation of two phases with a definite meniscus observable therebetween and without an obvious change in the volume of either phase. "Without an obvious change in the volume of either phase" means than no volume change is observed in either the water or solvent phases as determined by conventional glassware volumetric techniques. A Karl-Fischer titration of the solvent will show the presence of a measurable amount of water. By "volatilizes" it is meant that if the coating resin is analyzed for its organic resin solvent content after the coating resin has achieved the desired performance characteristics, the solvent content will be less than about 1%. Suitable organic solvents include toluene, xylene, methyl isobutyl ketone (MIBK), and mixtures thereof. MIBK and xylene are preferred. The amount of organic solvent should be sufficient to attain the desired balance of properties both in the bath (explained more fully below) and after a coated substrate is removed therefrom and dried, while minimizing solvent emission. Amounts of resin solvent up to about 100% by weight, based upon the weight of coating resin, are preferred.

Suitable coalescing solvents are soluble in water, solubilize the coating resin, and volatilize at a temperature below that at which the coating composition will be cured. The term "coalescing solvent" means a solvent which is soluble in both the resin and the aqueous medium. By "soluble" it is meant that the coalescing solvent forms a homogeneous solution with both the resin and the aqueous medium when added to either in any proportion. "Volatilizes" has the same meaning given above with respect to the organic resin solvent except that the analysis is conducted for the presence of the coalescing solvent. The solvent promotes the coalescence of latex particles into a continuous film during drying. Preferred coalescing solvents include isopropanol, butanol, isophorone, 4-methoxy-4-methyl-2-pentanone, alkyl ethers of ethylene glycol, 2-ethylhexanol, cyclohexanol, and mixtures thereof. The amount of coalescing solvent should be sufficient to attain the desired balance of properties both in the bath and after a coated substrate is removed therefrom and dried, while minimizing solvent emissions. Amounts of coalescing solvent up to about 50% by weight, based upon the weight of coating resin, are preferred.

The water in the bath preferably is distilled or deionized. If deionized water is used, its conductivity should be sufficiently low to enable efficient electrodeposition. The amount of water preferably is adjusted to provide about 1% to about 40% solids in the bath, more preferably about 5% to about 25%.

For non-electrodeposition applications, a coating resin adducted with the partially blocked polyisocyanate preferably is combined with solvents of the type customarily used in water-borne coatings. Such solvents include water and volatile low molecular weight alcohols and ketones. Solvents of the type customarily used in solvent-borne coatings may also be employed but are less preferred.

If desired, the coating compositions of the invention may be combined with other adjuvants of the type customarily employed in water-borne or solvent-borne coatings, e.g., other crosslinking or polymerization catalysts (e.g., thermal catalysts), antioxidants, surfactants, wetting agents, leveling agents, dispersing aids, defoamers, dyes and the like. The specific types and amounts of such adjuvants will be familiar to those skilled in the art.

4. Use of cathodic electrophoretically-depositable coatings as structural adhesive bonding primers.

Coating compositions according to the invention are particularly useful as cathodic electrophoretically-depositable structural adhesive bonding primers (hereinafter referred to as CEDSABPs). The CEDSABPs of this invention are especially useful for priming aluminum substrates that will be subjected to moderate temperature service, for example, temperatures below about 300 °F (149 °C). Typically, the CEDSABPs of the invention comprise a coating resin adducted with the partially blocked polyisocyanate to provide a self-crosslinking organic resin, a resin solvent, a coalescing solvent, and distilled or deionized water, all as described more fully hereinabove.

The various ingredients comprising the coating resin can be combined, for example, by dispersing the coating resin in either water, the organic resin solvent, and/or the coalescing solvent. Preferably this is carried out by slowly adding water to the coating resin with stirring until a viscosity maximum (indicative of an emulsion phase inversion) is observed. After phase inversion occurs, water can be added rapidly, along with any additional desired resin and/or coalescing solvent(s), to achieve the desired solids level and amount of solvent(s).

High molecular weight coating resins preferably are dispersed under high shear conditions. The pigments are separately dispersed in water using mechanical milling. Dispersion is enhanced by adding an appropriate amount of the coating resin, for example, about 1% to about 25% by weight based on the total weight of pigments. The resulting dispersion is then blended with the solution of coating resin, water and solvent(s) and the amount of water is adjusted to provide the desired solids level in the final CEDSABP.

The CEDSABP can be applied to metallic substrates using methods familiar to those skilled in the art. The CEDSABP preferably is placed in a nonconductive vessel equipped with a stirrer and a metallic (e.g., stainless steel) anode. The vessel itself, if metallic, can serve as the anode. The substrate to be coated is placed in fluid contact with the CEDSABP bath. The substrate and anode are connected to a power supply, the substrate serving as the cathode.

Although voltages exceeding 300 volts may be employed, lower voltages, for example, about 5 to about 80 volts are preferred. Current is provided for a time sufficient to attain the desired coating thickness. Typical thicknesses are in the range of about 0.002 to about 0.008 millimeters. The preferred time is less than about 1 minute and more preferably is less than about 20 seconds.

The substrate is then disconnected from the power supply and rinsed to remove excess CEDSABP. Preferably, the coated substrate is allowed to air dry for approximately 30 minutes, followed by heating in an oven at a temperature and for a time sufficient to crosslink the CEDSABP coating. When applied to an aluminum substrate, curing temperatures of less than 300 °F (149 °C) and curing times of about 1 hour are preferred. Higher cure or post-cure temperatures (e.g., 450 °F (232 °C)) and shorter or longer curing times can be used, especially on heat-resistant substrates such as titanium or steel.

The CEDSABP bath should be periodically replenished in order to maintain the desired content and composition of active ingredients. Bath stability is enhanced by avoiding excess nitrogen content in the coating resin, addition of an appropriate dispersion aid (e.g., a coating resin containing polyethylene oxide groups), classification and/or filtration of particulates in the CEDSABP, periodic refiltration of the CEDSABP, and appropriate control of pH (e.g., by employing a slightly alkaline pH for CEDSABPs containing barium chromate). The following examples are offered to aid understanding of the present invention and are not to be construed as limiting the scope thereof. Unless otherwise indicated, all parts and percentages are by weight.

**Example 1**

**Generation of a Partially Blocked Polyisocyanate**

All glassware was thoroughly cleaned and dried overnight in a 300 °F (149 °C) forced air oven to insure freedom from moisture. Gaseous nitrogen was flushed through the apparatus immediately after assembly. 273.6 parts liquid dimethylamine was condensed from a gas cylinder into a pressure equalizing dropping funnel equipped with a dry ice finger condenser. 1110.1 parts of a mixture of the 2,4-and 2,6-isomers of tolylene diisocyanate were weighed into a 2 liter flask (a 5% equivalent excess of isocyanate). Approximately 1 liter of n-hexane dried with molecular sieves was added to the polyisocyanate mixture.

A reactor equipped with an air driven stirrer, a water-cooled condenser, and a dry ice-cooled finger condenser was assembled and the dropping funnel containing dimethylamine was connected. The reaction flask was cooled to approximately 40 °F (5 °C) with an ice/salt bath. As the dimethylamine was added, the nitrogen flow was removed. The dimethylamine was added dropwise over a period of about 1 hour and dry hexane was used to wash down the dimethylamine. The temperature was maintained at about 40 °F (5 °C).

A white precipitate began to form immediately and an exotherm was observed. After the dimethylamine

was added, the reaction mixture was allowed to stir for another hour at a temperature of about 40 ° F (5 ° C). N-hexane was added to further slurry the product. The product was vacuum filtered. The white precipitate was again slurried with n-hexane, stirred and refiltered. This procedure was performed twice. The result of this reaction will be referred to hereinafter as "Product A". Infrared (IR) analysis and high performance liquid chromatography (HPLC) confirmed the presence of the monoisocyanate urea of tolylene diisocyanate (tolylene diisocyanate partially blocked by dimethylamine). IR analysis showed a strong peak consistent with the presence of isocyanate. The HPLC retention time of Product A was markedly different than the retention times for either the diurea (fully blocked diisocyanate) or the 2,4- and 2,6-tolylene diisocyanate mixture.

**Example 2**

**Generation of a Partially Blocked Polyisocyanate Resin Adduct**

All glassware was dried in a 300 ° F (149 ° C) oven to remove moisture. 878 parts of EPON 1001 (product of Shell Corp.) were dried in a vacuum oven at 120 ° F (49 ° C) to remove moisture. 219 parts of Product A were added to 1000 parts of methylene chloride previously dried over molecular sieves. The dried EPON 1001 was dissolved in 1317 parts of dry methylene chloride and heated to reflux to aid in dissolution. The Product A solution was added to the EPON 1001/methylene chloride mixture. IR analysis revealed an obvious isocyanate peak at 2070 $cm^{-1}$.

3.87 parts of M&T Catalyst T-9 commercially available from M&T Chemicals (believed to be dibutyltin dilaurate) were added and the reaction was refluxed at 106 ° F (41 ° C) overnight. After 16 hours another 3.87 parts of M&T catalyst T-9 were added. IR analysis showed that the earlier isocyanate peak had been replaced by a peak at 1710 $cm^{-1}$ signifying urethane formation. This reaction and the fact that a soluble resin resulted confirmed that the partially blocked polyisocyanate was indeed monofunctional. The methylene chloride was removed by distillation and stripping in a vacuum oven in which the temperature did not exceed 140 ° F (60 ° C). The partially blocked polyisocyanate resin adduct generated in the foregoing reaction will be referred to as "Product B".

**Example 3**

**Generation of a CEDSABP Using Product B**

A glass reaction flask equipped with a stirrer, a condenser, a pressure equalizing dropping funnel, and a thermostatically controlled bath was set up. 250 parts of Product B and 300 parts of methylene chloride were added to the flask and the mixture was stirred until the resin dissolved. 44.5 parts of diethanolamine were added to the reaction mixture by means of the dropping funnel and were washed down with 77.5 parts of butyl cellosolve (1-butoxyethanol). The reaction refluxed overnight. After refluxing, the methylene chloride was stripped off with vacuum. 87.5 parts of MIBK and 38.7 parts of 88.7% pure lactic acid were added. The reaction was allowed to proceed for 4 hours after which 2000 parts of water were slowly added to the reaction mixture. A stable, hazy white-yellow dispersion resulted. The percent solids was 19.4%. This reaction product will be referred to as "Resin Dispersion A".

54 parts of zinc phosphate, 27 parts of Resin Dispersion A, and 300 parts of distilled water were placed in a ball mill equipped with ceramic media and milled overnight. The ball mill batch was combined with 1300 parts of Resin Dispersion A and 2003 parts of distilled water to yield CEDSABP 1.

**Comparative Example 1**

Using the teachings of the aforementioned U.S. Patent No. 3,935,087, 2-ethylhexanol was employed to generate an isocyanate partially blocked by an alcohol. This will be referred to as "Comparative Product A".

Comparative Product A was adducted with a resin to form "Comparative Product B". 400 parts of EPON 1001 were weighed into a reaction system comprising a flask, a dropping funnel, a condenser, and a Dean Stark trap. 118 parts of MIBK were added, the system was heated to reflux, and the resulting water-MIBK azeotrope was collected. The reaction mixture was cooled to 212 ° F (100 ° C) and 200 parts of Comparative Product A were added. A slight exotherm was observed. 0.5 parts of dibutyltin dilaurate were added as a catalyst. A significant portion of the MIBK had been lost; therefore 40.6 parts of dry MIBK were added to the reaction. The reaction mixture was heated to about 257 ° F (125 ° C) for 1 hour and then dumped to generate Comparative Product B. The percent solids were 89.5% and the epoxy equivalent

weight was 697 grams/equivalent.

A synthetic apparatus was set up which included a flask, a stirrer, an addition funnel, an oil bath, and a condenser. 343.6 parts of Comparative Product B and 67 parts of MIBK were added and allowed to form a homogeneous mixture. 46.3 parts of diethanolamine and 25 parts of butyl cellosolve were added and allowed to react for 2 hours at 185°-194°F (85-90°C). 40.28 parts of 88.7% pure lactic acid and 37 parts of distilled water were added and the salt formation was allowed to proceed for 2 hours after which the product was dumped. This product ("Comparative Resin Solution A") had a solids content of 66.9%.

376.8 parts of Comparative Resin Solution A were mixed with 37.68 parts MIBK and 19.93 parts butyl cellosolve. A yellowish solution resulted which was then mixed with 1865.6 parts of distilled water by slowly adding the water and mixing vigorously. This will be referred to as "Comparative Resin Dispersion A". 54 parts of zinc phosphate, 8.07 parts of Comparative Resin Solution A, and 300 parts of distilled water were placed in a ball mill and milled overnight. The entire dispersion was mixed with all of Comparative Resin Dispersion A and another 1003 parts of distilled water were added. This will be referred to as "Comparative CEDSABP 1".

**Comparative Example 2**

**Generation of a CEDSABP Using the bis-dimethylamine-urea of Tolylene Diisocyanate**

A glass synthetic apparatus was set up comprising a flask, a condenser, a dropping funnel, a stirrer, and an oil bath. 500 parts of EPON 1001 having an epoxy equivalent weight of 497 grams/equivalent were weighed into the flask and the resin was dissolved in refluxing, previously dried methylene chloride. 109.6 parts of diethanolamine were added dropwise followed by the addition of 155 parts of butyl cellosolve. The reaction was allowed to proceed for about 72 hours at 131°F (55°C). 175 parts of MIBK were then added and the methylene chloride was removed by vacuum distillation. 95.33 parts of 88.7% pure lactic acid were added and allowed to react for 2 hours at room temperature. Distilled water was added until the flask was approximately 3/4 full. The reaction mixture ("Comparative Resin Solution B") was dispersed. It had a solids content of 41.2%. The procedure was repeated to provide more material, which will also be referred to as "Comparative Resin Solution B". It had a solids content of 39.2%.

494.7 parts of Comparative Resin Solution B were mixed with 14.04 parts of butyl cellosolve and 15.83 parts MIBK. This solution was then mixed with 1775 parts of distilled water by slowly adding the water to the resin solution with vigorous stirring, thereby forming "Comparative Resin Dispersion B".

The bis-dimethylamine-diurea of tolylene diisocyanate was synthesized and a curative paste of the same was prepared by placing 44.91 parts of the diurea in a ball mill jar equipped with ceramic media. 10.9 parts of Comparative Resin Solution B and 300 parts of distilled water were also added. The mixture was ball milled for 24 hours.

A pigment paste was prepared by adding 54 parts of zinc phosphate to a ball mill jar equipped with ceramic media. 31.1 parts of Comparative Resin Solution B and 300 parts of distilled water were also added. The mixture was ball milled for 24 hours.

Comparative Resin Dispersion B and the ball mill pastes were mixed and diluted with 696 parts of distilled water to yield Comparative CEDSABP 2.

**Comparative Example 3**

**Generation of a CEDSABP Using a Commercially Available Fully Blocked Isocyanate**

328.9 parts of Comparative Resin Solution B were mixed with 164.4 parts of DESMODUR LS-2759, a fully blocked isocyanate of unknown composition commercially available from Mobay Corporation. This resin solution was then diluted by slowly adding 1807 parts of distilled water and stirring vigorously.

54 parts of zinc phosphate, 13.8 parts of Comparative Resin Solution B, and 300 parts of distilled water were placed in a ball mill equipped with ceramic media and milled overnight to form a pigment paste.

Resin Dispersion B and the pigment paste were mixed with 998 parts of distilled water to generate Comparative CEDSABP 3.

**Comparative Example 4**

**Generation of a CEDSABP Using a Commercially Available Fully Blocked Isocyanate**

145.1 parts of Comparative Resin Solution B were mixed with 296 parts of NB 3 46635 PP4, a fully blocked isocyanate of unknown composition commercially available from Mobay Corporation. This resin solution was then diluted by slowly adding 1859 parts of distilled water and stirring vigorously.

54 parts of zinc phosphate, 13.1 parts of Comparative Resin Solution B, and 300 parts of distilled water were placed in a ball mill equipped with ceramic media and milled overnight to form a pigment paste.

Resin Dispersion B and pigment paste were milled with 998 parts of distilled water thus forming Comparative CEDSABP 4.

The several comparative CEDSABP's were then analyzed and compared with CEDSABP 1. More particularly, CEDSABP 1 and each of the Comparative CEDSABP's 1-4 were applied to an aluminum alloy surface to evaluate the degree of cure of the compositions and to assess their relative utilities as a coating. CEDSABP 1 and each comparative CEDSABP were placed in a glass jar containing two stainless steel electrodes (anodes) that were connected to a KEPCO regulated DC power supply. The CEDSABP's were circulated in the jar by a centrifugal pump. Strips of 2024-T3 aluminum alloy were surface prepared according to the phosphoric acid anodizing method of Boeing Specification BAC-5555. Each CEDSABP was applied at various voltages using the aluminum strips as the cathode and then cured at different temperatures for one hour.

Solvent resistance to methyl ethyl ketone (MEK) was used to measure the degree of cure. The surface of the coating was rubbed back and forth with an MEK soaked cheesecloth. A back and forth rub is known as a "double rub". The number of double rubs necessary to perceptibly remove the coating was counted. Perceptible removal of the coating after about 25 double rubs indicated that the coating had partially cured. 50 double rubs was indicative of excellent resistance to solvent and clearly demonstrated a crosslinked coating. The results of this analysis are shown in Table 1.

TABLE 1

| Number of MEK Double Rubs After a 1 Hour Cure | | | | | | | |
|---|---|---|---|---|---|---|---|
| CEDSABP No. | Curing Temperature (°F) | | | | | | Type of Coating |
| | 225[1] | 250[2] | 275[3] | 300[4] | 350[5] | 400[6] | |
| 1 | 10 | 27 | 50 | 50+ | 50+ | NT | Thin yellow/white |
| Comp. 1 | 1 | 2 | 2 | 4 | 5 | 40 | Thin yellow/white |
| Comp. 2 | NT | 2 | 2 | 2 | 2 | 15 | Thin yellow/white |
| Comp. 3 | 50+ | 50+ | 50+ | 50+ | 50+ | 50+ | Lumpy |
| Comp. 4 | would not give an adequate coating | | | | | | |
| Comp. = Comparative<br>NT = Not tested | | | | | | | |

[1]107°C
[2]121°C
[3]135°C
[4]149°C
[5]177°C
[6]204°C

The CEDSABPs were also checked for mechanical and chemical stability by removing the CEDSABPs from the glass jar, placing them in lined cans, placing the cans on a roller mill, and evaluating the cure and deposition characteristics on approximately a weekly basis. Comparative CEDSABP 3 was lumpy and no longer useful as a coating material after 4 days of aging. Comparative CEDSABP 4 did not provide a stable coating. CEDSABP 1 and comparative CEDSABPs 1 and 2 showed essentially the same coating and cure characteristics as the initial results shown in Table 1 after up to 12 weeks of aging.

The formulas used to generate CEDSABP 1 and Comparative CEDSABPs 1-4 have the same molar amount of blocked isocyanate functionality. CEDSABP 1 was formed in accordance with the invention. Comparative CEDSABP 1 reacted an isocyanate partially blocked with an alcohol and a suitable resin. Comparative CEDSABP 2 employed a diisocyanate fully blocked by amine functional groups rather than the polyisocyanate partially blocked by amine (CEDSABP 1) or the polyisocyanate partially blocked by an alcohol (Comparative CEDSABP 1). Comparative CEDSABPs 3 and 4 used commercially available fully

blocked isocyanates.

CEDSABP 1 formed according to the invention performed acceptably even when cured at temperatures as low as about 275 ° F (135 ° C). Comparative CEDSABP 1, on the other hand, did not exhibit an equivalent performance even when cured at a temperature of about 400 ° F (204 ° C). Comparative CEDSABP 2 demonstrates that a diisocyanate fully blocked with amine does not cure even at temperatures of about 400 ° F (204 ° C).

Comparative CEDSABP 3 cured at relatively low temperatures but gave a poor coating. After four days of aging in a roller mill, comparative CEDSABP 3 was no longer useful. Comparative CEDSABP 4 did not provide a useful coating at all.

The foregoing demonstrates that resins made according to the invention cure at temperatures substantially below presently known resins based on pendant urethanes. Furthermore, resins according to the invention display better aging stability than presently known fully blocked isocyanates which cured at lower temperatures. The urea (the amine blocked isocyanate) of this invention must be pendant to be operative since the nominally equivalent diurea (fully blocked diisocyanate) of tolylene diisocyanate surprisingly did not effect a cure.

**Example 4**

**Evaluation of an Acrylic CEDSABP Containing No Groups Reactive with the Thermal Degradation Products of the Partially Blocked Polyisocyanate**

A glass synthetic reaction system was set up consisting of a reaction flask, a condenser, a nitrogen gas inlet, a stirrer, and an oil bath. The following ingredients were weighed into the reaction flask:

80 parts ethyl acetate
40 parts dimethylaminoethylmethacrylate
48.0 parts 2-hydroxyethylmethacrylate
48.6 parts styrene
4 parts tertiary dodececylmercaptan

Nitrogen gas was bubbled through the reaction mixture for 2 hours and the reaction mixture was heated to reflux with stirring. 4 parts of azo-bis-iso-butyronitrile were added. After 5 minutes a vigorous exotherm occurred and the reaction was allowed to proceed for 2 hours at reflux and with stirring. 1 part of azo-bis-iso-butyronitrile was added to the viscous, clear reaction mixture and was allowed to react overnight at reflux and with stirring.

In a separate vessel, 82.5 parts (stoichiometrically equivalent to the 2-hydroxyethylmethacrylate) of the partially blocked polyisocyanate of example 1 was dissolved in 250 parts of dry methylene chloride. 0.5 parts of M&T Catalyst T-9 were added directly to the acrylic reaction mixture. The partially blocked polyisocyanate solution was then added to the acrylic polymer solution. The reaction was allowed to proceed for 1 hour at reflux and with stirring after which the low boiling solvents were removed by an aspirator or vacuum pump.

2 hours after the addition of the partially blocked polyisocyanate of example 1, an IR spectrum of the resulting resin was recorded. The spectrum was devoid of an isocyanate peak. 115.6 parts of MIBK were added and the mixture was stirred until a homogeneous solution formed. 23.2 parts of 88.7% pure lactic acid were added and the amine acid salt was allowed to form over a two hour period. 121.5 parts of butyl cellosolve were added and the mixture was stirred until a homogeneous solution formed. A resin solution having 41.6% solids was obtained. This will be referred to as "Resin Solution A".

606.3 parts of Resin Solution A were dispersed in 1138 parts of distilled water by slowly adding the distilled water and stirring vigorously. A pigment paste was made by adding 54 parts zinc phosphate, 12.9 parts of Resin Solution A, and 300 parts of distilled water to a ball mill jar equipped with ceramic media. The ball mill jar contents were milled for 24 hours. The entire resin dispersion and pigment paste were combined and diluted with 1003 parts of distilled water to generate CEDSABP 2.

CEDSABP 2 was applied to phosphoric acid anodized aluminum at 20 volts for 5 seconds. An adherent coating was obtained. Curing the coating at 250 ° F (121 ° C) resulted in a cured coating that was resistant to more than 50 MEK double rubs.

This example demonstrates that resins containing a pendant partially blocked polyisocyanate are not required to also possess T, $Q^3$, and/or $Q^4$ groups that are reactive with the thermal degradation products of the partially blocked polyisocyanate.

**Example 5**

**Polymers Reactive with the Thermal Degradation Products of Polyisocyanates Partially Blocked by Amines as Self-Curing Materials**

A polymer having T, $Q^1$ and $Q^2$ groups reactive with the thermal degradation products of a polyisocyanate partially blocked by an amine was generated. Glassware was dried in a 300 °F (149 °C) oven for 2 hours. 1000 parts of EPON 1001 were dissolved in 1000 parts of dry methylene chloride. In a separate vessel, 380 parts of the partially blocked polyisocyanate of example 1 (Product A) were dissolved in 2000 parts of dry methylene chloride. The Product A solution was added to the EPON 1001 solution. 5 parts of M&T Catalyst T-9 were then added. The reaction mixture was heated to reflux and allowed to react for 2 hours. 5 parts of M&T Catalyst T-9 were added and the reaction was allowed to proceed for another 2 hours at reflux. An IR spectrum of the resin did not show an isocyanate peak thereby indicating reaction of Product A with EPON 1001. The methylene chloride was stripped off by vacuum distillation. The epoxy equivalent weight was 603 grams/equivalent. This resin is referred to as "Product C". $Q^1$ and $Q^2$ comprised epoxy groups. T comprised hydroxyl functionality that had not reacted with isocyanate.

15 parts of Product C were dissolved at room temperature in 85 parts of methylene chloride. The dissolution was complete in less than 1/2 hour and yielded a hazy yellow solution. About 20 grams of the solution were placed in an aluminum weighing dish and heated in an oven at 250 °F (121 °C) for 1 hour. After thermal exposure, the resin turned brown, bubbled up, became brittle, and smelled faintly of amine. The aluminum dish was pulled away from the resin and the resin was placed in a can containing 100 ml of methylene chloride. After two hours on a roller mill, the resin displayed no signs of dissolution into the methylene chloride in which it had been soluble before thermal exposure. Thus, the resin was deemed to have cured or crosslinked.

The 15% solids solution of Product C in methylene chloride was also coated onto a metal plate. Enough solvent was allowed to flash from the coating to yield a light yellow tacky film on the metal surface. The coated metal was placed in a forced air oven at 250 °F (121 °C) for one hour. After removing the metal plate and allowing it to cool, the coating was subjected to the MEK double rub test. The coating withstood 100 MEK double rubs without any perceptible coating removal.

This example further demonstrates that the products of the invention can be used as self-curing resins which cure at relatively low temperatures.

**Example 6**

**Use of Resins According to the Invention as CEDSABPs**

200 parts of Product C were added to a reaction flask equipped with a stirrer, a thermometer, a condenser, a dropping funnel, and an oil bath. 50 parts of MIBK and 20 parts of butyl cellosolve were also added. The reaction mixture was heated to 176 °F (80 °C) until it was homogeneous. A mixture of 39.2 parts of thiodiethanol, 30.8 parts of 88.7% pure lactic acid, and 26 parts distilled water were added to the reaction mixture with continued heating. After 30 minutes, the reaction mixture was allowed to cool for 30 minutes. 11.7 parts of butyl cellosolve and 8.3 parts of distilled water were added. After the reaction mixture turned homogeneous another 18.0 parts of butyl cellosolve were added as well as 4.5 parts of Witconol NS500LQ surfactant obtained from Wyandotte. After the solution had cooled to about room temperature, another 1000 parts of distilled water were added slowly while stirring vigorously. The result was a stable dispersion of 19.4% nonvolatiles. This will be referred to as "Resin Dispersion B".

In a separate reaction, 630 parts of EPON 836, 400 parts of JEFFAMINE D2000 (a propyleneoxide diamine commercially available from Jefferson Chemical), and 215 parts of MIBK were placed in a reaction vessel. The reaction mixture was heated to 185 °F (85 °C) with stirring for 2 hours at which time heat was removed and the reaction was allowed to proceed for 72 hours at ambient temperature. A clear, amber, medium viscosity solution resulted. The mixture was again heated to 180 °F (82 °C). A mixture of 146.4 parts thiodiethanol, 144 parts of 85% pure lactic acid, and 32 parts distilled water were added to the reaction mixture. After 75 minutes, 46.8 parts of butyl cellosolve and 33.2 parts of distilled water were added. After the mixture became homogeneous another 72 parts of butyl cellosolve were added. The reaction mixture was then dumped. Enough water was added slowly with vigorous stirring to this resin solution to make a 15.4% solids dispersion. The transparent dispersion/solution will be referred to as "Pigment Dispersing Aid A".

100 parts of barium chromate, 130.2 parts of Pigment Dispersing Aid A, and 127 parts of distilled water were added to a ball mill equipped with ceramic media. The material was milled for 24 hours to result in a barium chromate pigment paste.

137 parts of the barium chromate pigment paste were mixed with 361 parts of Resin Dispersion B and 1502 parts of distilled water to form CEDSABP 3. CEDSABP 3 was stored in a lined steel can under agitation for 211 days. Use of CEDSABP 3 as a structural adhesive bonding primer was evaluated with respect to overlap shear strength and floating roller peel strength.

In order to test overlap shear strength, panels of bare or clad 2024-T3 aluminum were prepared in accordance with ASTM D-1002 and cleaned in accordance with ASTM D-2651-79, Method G, but using a 10 minute etch. The etched panels were rinsed in tap water, then phosphoric acid anodized in accordance with Boeing specification BAC-5555. The anodized panels were primed by placing them in a stirred CEDSABP bath contained in a glass tank equipped with a stainless steel anode and applying a potential of about 30 volts DC for about 5-30 seconds. The primed panels were air dried and then cured at 250° F (121° C) for 1 hour. The primed panels were bonded together in an overlapping relationship along their major axes using a 12.7 mm wide strip of epoxy film adhesive (AF-163-2K, 0.06 wgt, commercially available from the Minnesota Mining and Manufacturing Company, St. Paul, MN). The resulting assembly was fastened together with tape and cured in an autoclave. The temperature of the autoclave was increased by 2° to 3° F/min. (1° to 2° C/min.) to a maximum temperature of 250° F (121° C), held at that temperature for 1 hour, air-cooled to 174° F (79° C), and then water-cooled to 77° F (25° C). The bonded panels were sawn into one inch (2.54 cm) wide strips and evaluated for overlap shear strength in accordance with ASTM D-1002 using two different test temperatures, 77° F (25° C) and 180° F (82° C).

In order to test floating roller peel strength, panels of bare or clad 2024-T3 aluminum were prepared for testing in accordance with ASTM D-3167-76, then cleaned, anodized and primed using the same procedure employed for the overlap shear samples. The primed panels were bonded together using the same film adhesive and cure cycle employed for the overlap shear samples. The panels were evaluated for floating roller peel strength in accordance with ASTM D-3167-76, but using one inch (2.54 cm) wide strips and an INSTRON tensile tester operated at a peel rate of 305 mm/min.

The results are shown in Table 2. Example 6 demonstrates that compositions according to the invention are useful as cathodically, electrophoretically depositable structural adhesive bonding primers.

TABLE 2

| | |
|---|---|
| Overlap Shear Strength (at Room Temperature, approximately 77° F (25° C)) | 6460 psi |
| Overlap Shear Strength (at 180° F (82° C)) | 3286 psi |
| Floating Roller Peel Strength (at -67° F (-55° C)) | 70 piw |
| Floating Roller Peel Strength (at Room Temperature, approximately 77° F (25° C)) | 66 piw |
| psi = pounds per square inch | |
| piw = pounds per inch width | |

Reasonable variations or modifications are possible within the scope of the foregoing specification without departing from the invention which is defined in the accompanying claims.

## Claims

**1.** A resinous adduct comprising the reaction product of a polyisocyanate partially blocked by at least one amine and having the formula:

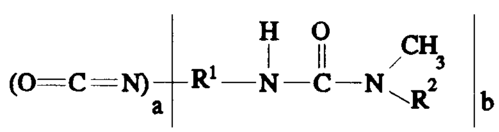

Wherein $R^1$ is the organic residue of an aliphatic, aromatic or aliphatic-aromatic polyisocyanate;
$R^2$ is selected from the group consisting of methyl and ethyl;
a is an integer ≧ 1;
b is an integer ≧ 1; and
a + b = 2, 3 or 4 and is the number of equivalents of isocyanate functionality of said polyisocyanate prior to having been partially blocked; and
a resinous material having a chemical moiety which is reactive with isocyanate.

2. A resinous adduct according to claim 1 wherein said resinous material is selected from the group consisting of materials having the general structure

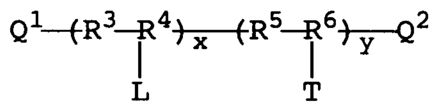

and materials having the general structure

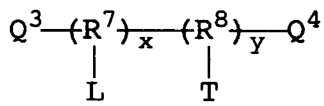

wherein $R^3$, $R^4$, $R^5$ and $R^6$ comprise monomer-forming chemical moieties or polymerization products thereof and may be the same or may be different;

$R^7$ and $R^8$ comprise the backbone portions of vinyl or acrylic group-containing monomers and may be the same or may be different;

$Q^1$ and $Q^2$ are chemical moieties which may be reactive with isocyanate functionality and may be the same or may be different;

$Q^3$ and $Q^4$ are chemical moieties which may be reactive with isocyanate functionality and may be the same or may be different;

L is a chemical moiety which is reactive with isocyanate functionality;

T is a chemical moiety which may be reactive with isocyanate functionality;

x is $\geqq 1$; and

y is $\geqq 0$.

3. A resinous adduct according to claim 2 wherein L is selected from the group consisting of amidyl, aminyl, imidyl, sulfonamidyl, amidinyl, nitraminyl, hydrazinyl, hydroxyaminyl, hydrazoyl, uryl, carbamoyl, hydroxyl, phenol, oxime, imidazolyl, and mercaptyl functionalities.

4. A resinous adduct according to claims 2 or 3 wherein at least one of T, $Q^1$ and $Q^2$ is unreactive toward secondary amine functionality.

5. A resinous adduct according to claims 2 or 3 wherein at least one of T, $Q^1$ and $Q^2$ includes epoxy or hydroxyl functionality.

6. A resinous adduct according to any preceding claim wherein said adduct cures upon exposure to a temperature less than about 400 °F (204 °C) for a time sufficient to induce crosslinking of said adduct.

7. A method of forming a polyisocyanate partially blocked by at least one amine and having the formula:

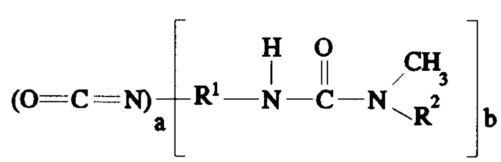

wherein $R^1$ is the organic residue of an aliphatic, aromatic or aliphatic-aromatic polyisocyanate;

$R^2$ is selected from the group consisting of methyl and ethyl;

a is an integer $\geqq 1$;

b is an integer $\geqq 1$; and

$a+b = 2, 3$ or $4$ and is the number of equivalents of isocyanate functionality of said polyisocyanate prior to having been partially blocked,

said method comprising a step of reacting a polyisocyanate with a dialkylamine selected from the group consisting of dimethylamine, ethylmethylamine and mixtures thereof, wherein said reaction is

carried out in a solvent system in which the polyisocyanate is very soluble and the partially blocked polyisocyanate is very insoluble.

**8.** A method according to claim 7 wherein said solvent system includes a solvent selected from the group consisting of pentane, hexane, heptane, octane, nonane, decane, undecane, dodecane, 3-methylpentane, 2-methylpentane, 2,3-dimethylbutane, 2,2-dimethylbutane, 2,2,3-trimethylbutane, 2,3-dimethylpentane, 4-ethyl-3-methylheptane, benzene, toluene, and xylene.

**9.** A method of forming a resinous adduct, according to claim 1, said method comprising the steps of forming a polyisocyanate partially blocked by at least one amine according to claims 7 or 8 and reacting said partially blocked polyisocyanate with a resinous material having a chemical moiety which is reactive with isocyanate functionality.

**10.** A method of forming an electrophoretically depositable composition, said method comprising the steps of providing a resinous adduct according to claim 1 and mixing with said adduct: (a) an organic solvent which is, at most, sparingly soluble in water and which volatilizes at a temperature below about 400 ° F (204 ° C), (b) a coalescing solvent which volatilizes at a temperature below about 400 ° F (204 ° C), and (c) water.

**11.** A method according to claim 10 wherein said organic solvent is selected from the group consisting of toluene, xylene, methyl isobutyl ketone, and mixtures thereof.

**12.** A method according to claims 10 or 11 wherein said coalescing solvent is selected from the group consisting of isopropanol, butanol, isophorone, 4-methoxy-4-methyl-2-pentanone, 2-ethylhexanol, cyclohexanol, alkyl ethers of ethylene glycol, and mixtures thereof.

**13.** A resinous adduct according to claims 1, 2, 3, 4, 5 or 6, wherein said resinous adduct provides a cathodically electrophoretically depositable composition.

**14.** An article comprising a substrate having a layer of a composition according to claims 1, 2, 3, 4, 5, or 6 thereon.

**15.** An article according to claim 14 wherein said substrate is formed at least in part from aluminum or alloys thereof.

**16.** A method of forming an article comprising a substrate having a layer of a composition according to claims 1, 2, 3, 4, 5, or 6 thereon, said method comprising the steps of: (a) placing said substrate in a vessel and in fluid contact with a bath of said composition, said vessel having an anode; (b) connecting said substrate and said anode to a power supply; (c) passing a current between said substrate and said anode and through said bath at a voltage and for a time sufficient to cause a layer of said coating composition to be electrophoretically deposited on said substrate.

**17.** A method according to claim 16 further comprising the steps of: (a) disconnecting said substrate from the power supply; (b) rinsing said article to remove excess composition; (c) drying said article; and (d) heating said article for a time and at a temperature sufficient to cause said composition to crosslink.

**18.** A method according to claim 17 wherein said article is heated at a temperature of less than about 400 ° F (204 ° C).

**19.** A method according to claim 18 wherein said article is heated at a temperature of less than about 300 ° F (149 ° C).

**20.** A method according to claim 19 wherein said article is heated at a temperature in the range of from about 225 ° F (107 ° C) to about 300 ° F (149 ° C).